# EUROPEAN PATENT SPECIFICATION

(11) **EP 2 423 721 B1**
(45) Date of publication and mention of the grant of the patent: **11.11.2015**
(21) Application number: 10008829.3
(22) Date of filing: 25.08.2010
(51) Int. Cl.: G02B 6/38

(54) **Adapter for receiving a hybrid connector part and a fiber optic connector part**
Adapter zum Aufnehmen eines Hybrid-Verbinderteils und Glasfaserverbinderteil
Adaptateur pour recevoir une pièce de connecteur hybride et pièce de connecteur à fibres optiques

(43) Date of publication of application: 29.02.2012
(73) Proprietor: CCS Technology, Inc., Wilmington, DE 19803 (US)
(72) Inventor: Tenderenda, Tadeusz, 02796 Warszawa (PL); Ciechomski, Tomasz, 99400 Lowicz (PL); Sokolowski, Bartlomiej, 97300 Piotrkow Trybunalski (PL)
(74) Representative: Sturm, Christoph

(56) References cited:
- EP-A1- 0 847 107
- EP-A2- 0 246 750
- EP-A2- 1 179 745
- EP-A2- 1 640 755
- WO-A1-03/073146
- US-A1- 2006 056 769
- US-A1- 2007 116 414
- US-A1- 2008 124 030
- US-A1- 2010 080 563

## Description

The invention relates to an adapter for receiving a hybrid connector part and a fiber optic connector part. Further on, the invention relates to an assembly comprising a hybrid connector part, a fiber optic connector part and an adapter for receiving said hybrid connector part and said fiber optic connector part.

There are known applications in which not only optical fibers but also copper conductors need to be connected to one another by way of a connector. An application in which both optical fibers and copper conductors have to be connected is, for example, known as "Radio over Fiber" (RoF) with distributed antenna systems.

In the case of the so-called "radio over fiber" application, a broadband radio signal is transmitted over the optical fibers to antenna units, which convert the optical signal into an RF signal. For the purpose of supplying power to the antenna units not only optical fibers, which serve for the transmission of the optical broadband radio signal, but also copper conductors, which ultimately serve for supplying power to the antenna units, need to be connected.

In practice, when both optical fibers and copper conductors have to be connected to one another in such an application, separate connectors are used for connecting the optical fibers and for connecting the copper conductors. Handling the cables and the connectors then presents difficulties in particular when the cables are laid in cable ducts of narrow dimensions. Further on, hybrid connectors for simultaneously connecting optical fibers and copper conductors are known from practice.

US 2007/0116414 A1 discloses an adapter. The adapter known from US 2007/0116414 A1 can be used for the connection of two identical connector parts, namely of two hybrid connector parts or two electrical connector parts or two fiber optic connector parts. An adapter body provides a first receptacle for receiving a first connector part and a second receptacle for receiving a second connector part, whereby said receptacles are positioned at opposite sides of said adapter body.

No solutions are known from prior art providing an easy and reliable connection between a hybrid connector part, said hybrid connector part having electrical terminal points and a fiber optic ferrule providing at least one fiber optic terminal point, and a fiber optic connector part, said fiber optic connector part having no electrical terminal points but a fiber optic ferrule providing at least one fiber optic terminal point.

Against this background, a novel adapter for receiving a hybrid connector part and a fiber optic connector part is provided. The novel adapter comprises an adapter body providing a first receptacle for receiving said hybrid connector part and a second receptacle for receiving said fiber optic connector part, whereby said receptacles are positioned at opposite sides of said adapter body; whereby said adapter body further provides insert holes receiving electrical contact sockets, said electrical contact sockets being connectable with the electrical terminal points of said hybrid connector part when said hybrid connector part is inserted in said first receptacle, wherein the insert holes receive said electrical contact sockets in such a way that first ends of the electrical contact sockets extend at a first side of the adapter body into the first receptacle so that the first ends of the electrical contact sockets can be contacted by the electrical terminal points of the hybrid connector part when the same is inserted in the first receptacle, and that second ends of the electrical contact sockets are at a second side of the adapter body positioned adjacent the second receptacle so that the second ends of the electrical contact sockets can be contacted by separate copper wires when the fiber optic connector part is inserted in the second receptacle.

The novel adapter provides an easy and reliable connection between a hybrid connector part and a fiber optic connector part.

Further on, a novel assembly comprising a hybrid connector part, a fiber optic connector part and an adapter for receiving said hybrid connector part and said fiber optic connector part is provided.

Preferred developments of the invention are provided by the dependent claims and the description which follows. Exemplary embodiments are explained in more detail on the basis of the drawing, in which:
- Figure 1: shows an adapter according to a preferred embodiment of to the invention, namely a first side of the same having a first receptacle for receiving a hybrid connector part;
- Figure 2: shows the adapter of Figure 1, namely a second side of the same having a second receptacle for receiving a fiber optic connector part;
- Figure 3: shows the adapter of Figure 1 with electrical contact sockets, namely the first side of the same;
- Figure 4: shows the adapter of Figure 1 with electrical contact sockets, namely the second side of the same;
- Figure 5: shows an exploded view of the adapter of Figure 1;
- Figure 6: shows a cross section of Figure 5;
- Figure 7: shows the adapter of Figure 1 with copper wires being connected to the electrical contact sockets;
- Figure 8: shows an assembly comprising a hybrid connector part, a fiber optic connector part and the adapter of Figure 1;
- Figure 9: shows an exploded view of the assembly of Figure 8;
- Figure 10: shows an exploded view of the hybrid connector part of the assembly of Figure 8; and
- Figure 11: shows a perspective view of the hybrid connector part of the assembly of Figure 8.

The application relates to an adapter for receiving a hybrid connector part and a fiber optic connector part.

Further on, the application relates to an assembly comprising a hybrid connector part, a fiber optic connector part and an adapter for receiving said hybrid connector part and said fiber optic connector part.

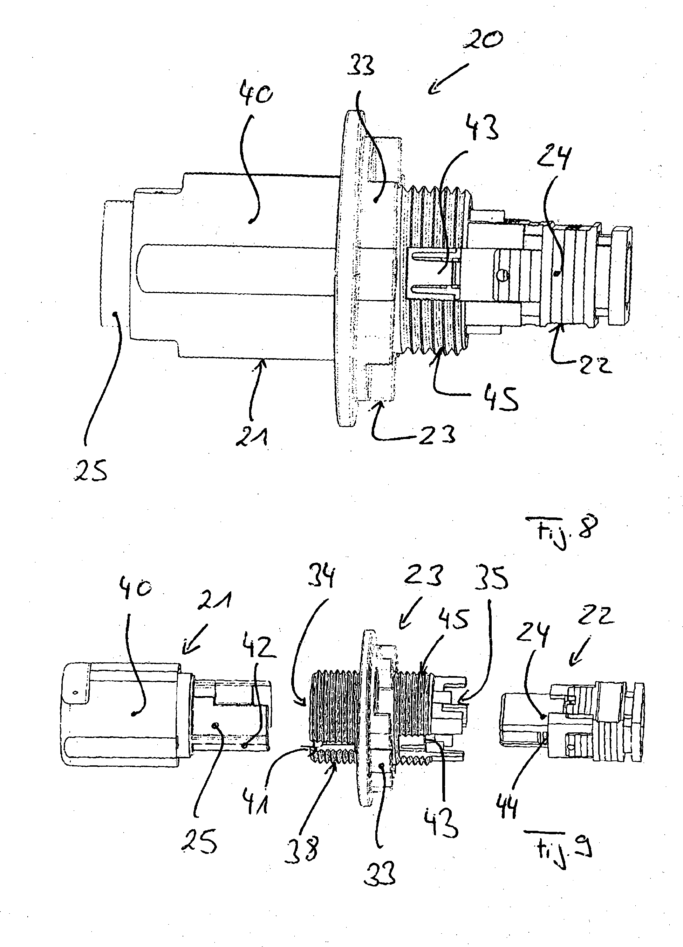

Figures 8 and 9 show different views of an assembly 20 comprising a hybrid connector part 21, a fiber optic connector part 22 and an adapter 23 for receiving said hybrid connector part 21 and said fiber optic connector part 22. The hybrid connector part 21 provides electrical terminal points and at least one fiber optic terminal point. The fiber optic connector part 22 does not provide electrical terminal points but at least one fiber optic terminal point. With the adapter 23 it is possible to provide an easy and reliable connection between the or each fiber optic terminal point of the hybrid connector part 21 and the or each fiber optic terminal point of the fiber optic connector part 22. The adapter 23 also provides an easy and reliable connection to electrical terminal points of the hybrid connector part 21, especially between the electrical terminal points of the hybrid connector part 21 and separate copper wires.

The fiber optic connector part 22 as shown in Figure 9 is preferably a multi fiber connector part 22 having a fiber optic ferrule (not shown) terminating a plurality of optical fibers thereby providing a plurality of fiber optic terminal points. Said fiber optic ferrule is positioned within a connector housing 24 of said fiber optic connector part 22. The fiber optic connector part 22 is preferably a so-called MTP connector to which a fiber optic ribbon cable having e.g. up to twelve optical fibers or up to twenty four optical fibers is terminated. Such MTP connectors are sold by Coming Cable Systems and are disclosed in "UniCam MTP Connectors, specification sheet LAN-421-EN, pages 1-2, Corning Cable Systems LLC, April 2009".

The use of such a MTP connector as fiber optic connector part 22 is preferred. However, it is also possible to make use of other fiber optic connector parts 22.

The hybrid connector part 21 as shown in Figures 9, 10 and 11 comprises a connector housing 25 accommodating electrical contacts 26, a fiber optic ferrule 27, a ferrule holding member 28 for the ferrule 27 and a spring element 29 acting against the ferrule holding member 25 and being held by a spring push element 30. The electrical contacts 26 are according to the shown embodiment designed as contact pins. The fiber optic ferrule 27 terminates a plurality of optical fibers thereby providing a plurality of fiber optic terminal points. The fiber optic ferrule 27 can provide e.g. up to twelve or up to twenty four fiber optic terminal points.

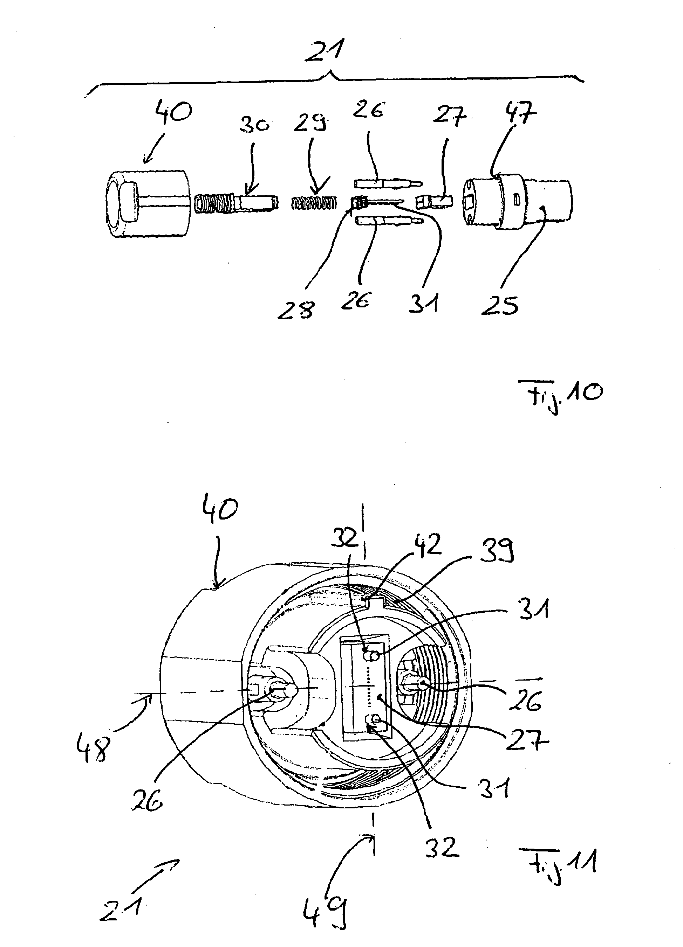

The ferrule holding member 28 accommodated by the hybrid connector part 21 comprises according to the shown embodiment guide pins 31 (see for Figures 10 and 11) running completely through openings 32 of the fiber optic ferrule 24 and entering into openings (not shown) of fiber optic ferrule (not shown) of the fiber optic connector part 22 when the hybrid connector part 21 and the fiber optic connector part 22 are mated and both received by the adapter 23.

The adapter 23 comprises an adapter body 33 providing a first receptacle 34 for receiving said hybrid connector part 21 and a second receptacle 35 for receiving said fiber optic connector part 22, whereby said receptacles 34 and 35 are positioned at opposite sides of said adapter body 33. Said adapter body 33 further provides insert holes 36 receiving electrical contact sockets 37, said electrical contact sockets 37 being connectable with the electrical terminal points of said hybrid connector part 21, namely with the electrical contacts 26 of the same, when said hybrid connector part 21 is inserted in said first receptacle 34.

Said adapter body 33 comprises a first outside screw thread portion 38 acting together with an inside screw thread portion 39 (see Figure 11) of a coupling nut 40 of said hybrid connector part 21 when the same is inserted in the first receptacle 34, whereby said first outer thread portion 38 is positioned together with the first receptacle 34 at a first side of the adapter body.

Said outside screw thread portion 38 of the adapter body 33 is provided by a section or a wall of the adapter body 33 defining the first receptacle 34.

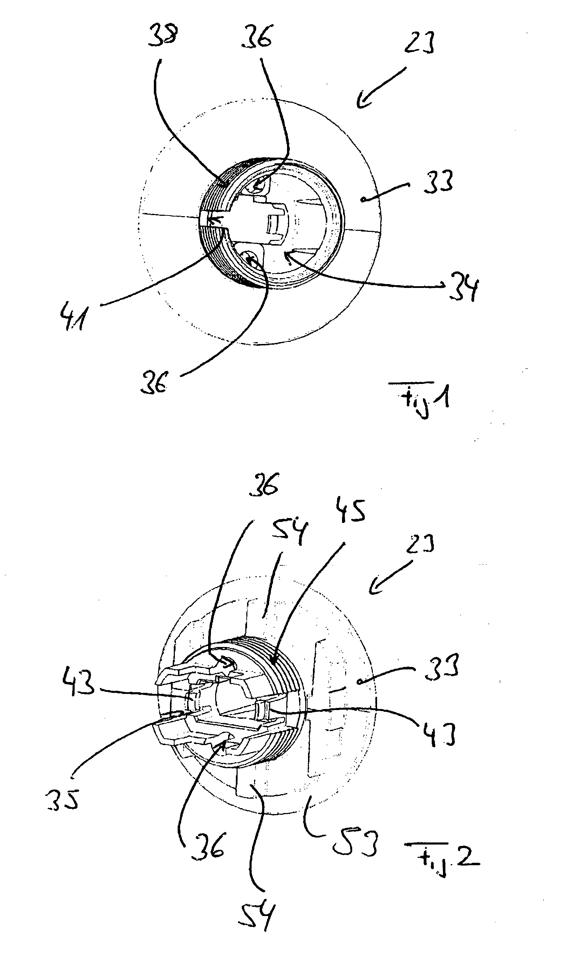

Said first receptacle 34 of said adapter body 33 further comprises a keying element 41 acting together with a keying element 42 of said hybrid connector part 21 when the same inserted in the first receptacle 34. The keying element 41 of the first receptacle 34 of said adapter body 33 is according to Figures 1, 3, 5, 7 and 9 provided by a groove and the keying element 42 of said hybrid connector part 21 is according to Figures 9 and 11 provided by a protrusion. The keying element 41 of the first receptacle 34 is provided by a groove in the section or wall of the adapter body 33 defining first receptacle 34, namely by a slot extending thorough the outside screw thread portion 38 of the adapter body 33.

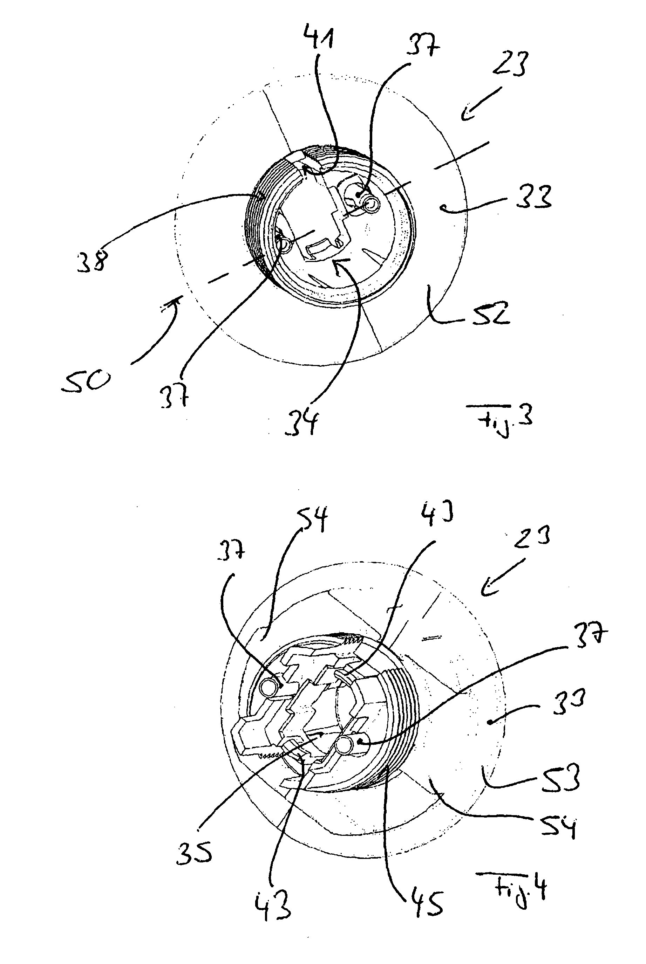

Said keying element 41 of the first receptacle 34 is according to Figure 3 positioned at a circumferential position of the section or wall of the adapter body 33 defining first receptacle 34 being approximately 90° offset to circumferential positions of said section or wall of the adapter body 33 defining first receptacle 34 through which an axis 50 (see Figure 3) extends, whereby the electrical contact sockets 37 are positioned along said axis 50. The electrical contact sockets 37 are positioned inside said section or wall of the adapter body 33 defining first receptacle 34.

It would also be possible that the keying element 41 of the first receptacle 34 of said adapter body 33 is provided by a protrusion and the keying element 42 of said hybrid connector part 21 is provided by a corresponding groove.

Said second receptacle 35 of said adapter body 33 comprises latching hocks 43 acting together with recesses 44 of said fiber optic connector part 22 when the same is inserted in the second receptacle 35.

Said adapter body 33 comprises further a second outside screw thread portion 45 for mounting the adapter 23 to a housing or a panel (not shown), whereby said second outer thread portion 45 is positioned together with the second receptacle 35 at a second side of the adapter body 33. Said outside screw thread portion 45 of the adapter body 33 is provided by a section or a wall of the adapter body 33.

Said insert holes 36 of the adapter body 33 receive said electrical contact sockets 37 in such a way that first ends of the electrical contact sockets 37 extend at a first side of the adapter body 33 into the first receptacle 34 so that the first ends of the electrical contact sockets 37 are contacted by the electrical terminal points, namely by the electrical contacts 26, of the hybrid connector part 21 when the same is inserted in the first receptacle 34.

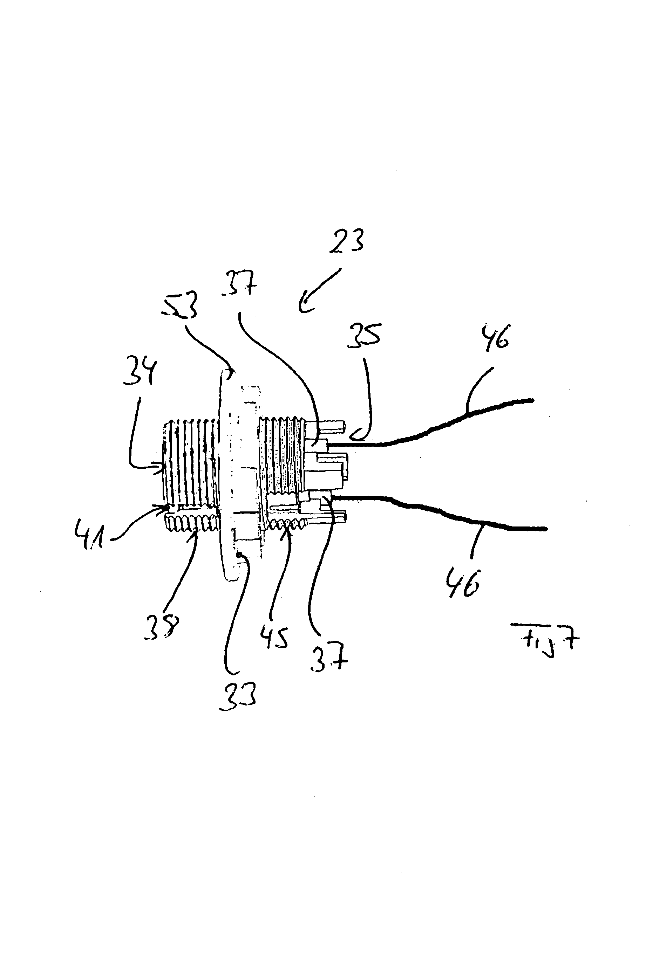

Second ends of the electrical contact sockets 37 are at a second side of the adapter body 33 positioned adjacent the second receptacle 35 so that the second ends of the electrical contact sockets 37 can be contacted by separate copper wires 46 (see Figure 7) when the fiber optic connector part 22 is inserted in the second receptacle 35.

As can be best seen in Figure 7, the first ends of the electrical contact sockets 37 are recessed within the first outside screw thread portion 38 of the first receptacle 34 of the first adapter body 33. Further on, the second ends of the electrical contact sockets 37 are exposed from second outer thread portion 45.

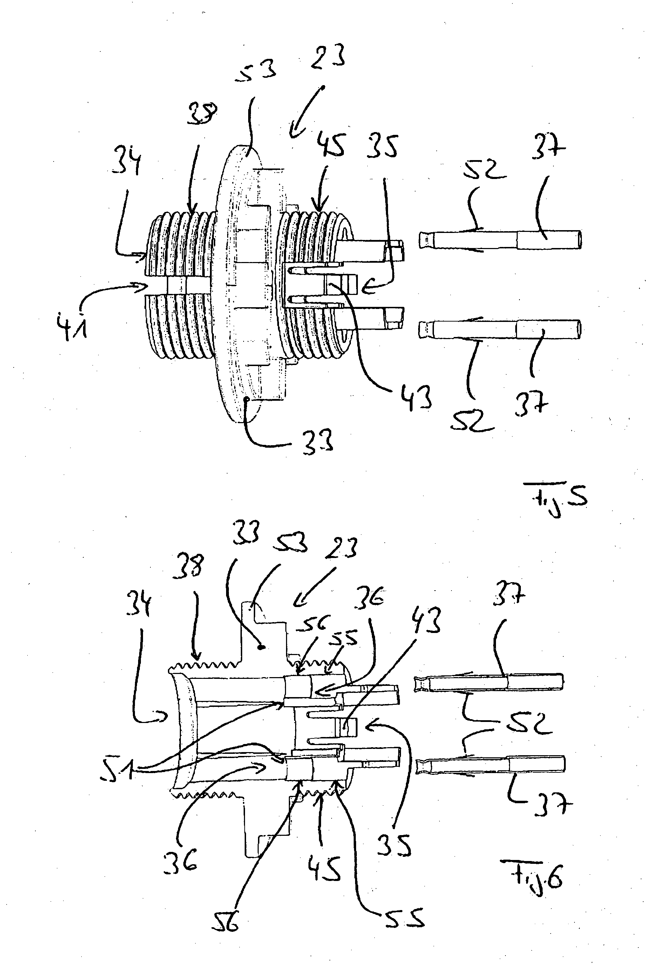

As can be best seen in Figure 6, the insert holes 36 receiving said electrical contact sockets 37 provide back stop elements 51 for barb-like elements 52 of the electrical contact sockets 37 when the same are inserted into the insert holes 36. A lead in portion 55 of the insert holes 36 through which the electrical contact sockets 37 are inserted into the insert holes 36 are provided in the region of the second receptacle 35.

Between the lead in portion 55 of the insert holes 36 and the stop elements 51 of the same the insert holes 36 comprise conical shaped portions 56 (see Figure 6) which provide stop means for the electrical contact sockets 37 when the same are inserted into the insert holes 36. When the electrical contact sockets 37are inserted into the insert holes 36 the barb-like elements 52 of the electrical contact sockets 37 are clicked behind the back stop elements 51. In this way, the electrical contact sockets 37 are fixed within the insert holes 36 in two directions, namely in lead in direction by the conical shaped portions 56 of the insert holes 36 and opposite to the lead in direction by the stop elements 51 of the insert holes 36 and the barb-like elements 52 of the electrical contact sockets 37.

When both connector parts 21, 22 are mated or fitted together with the adapter, free ends of the ferrules of the same are pressed together thereby providing a connection of fiber optic terminal points of the same.

As mentioned above, the hybrid connector part 21 and the adapter 23 are held together in their mated position by the coupling nut 40. The coupling nut 40 is at least partly surrounding the connector housing 25 of said hybrid connector part 21 when the hybrid connector part 21 and the adapter 23 are held together in their mated position by the coupling nut 40. The connector housing 25 has a round step cut portion 47 acting as stop member for said coupling nut 40.

As also mentioned above, the adapter 23 is mountable to a housing or a panel by said second outer thread portion 45. When the adapter 23 is mounted to a housing or a panel, a flange 53 having preferably a round contour contacts the housing or panel, whereby projections 54 of said flange 53 being positioned at the second side of the adapter body 33 provide a secure mounting of the adapter 23 to the housing or panel and prevent a rotation of the adapter 23 relative to the housing or panel in the mounted position.

The electrical terminal points 26 of the hybrid connector part 21 are positioned along a first axis 48 or plane (see Figure 11). Ends of optical fibers held and terminated by the fiber optic ferrule 27 of the hybrid connector part 21 are positioned along a second axis 49 or plane. These axis 48, 49 or planes are running perpendicular to each other. This allows to reduce the space needed for accommodating the copper and fiber connections within the hybrid connector part 21 and within the adapter 23.

A hybrid cable (not shown) is terminated to said hybrid connector part 21, wherein a fiber optic cable (not shown) is terminated to said fiber optic connector part 22, and wherein separate copper wires 46 are terminated to the electrical contact sockets 37 positioned within the insert holes 36 of said adapter body 33.

The separate copper wires 46 can be provided by copper pigtails. Alternatively, a copper coupler tube can be positioned inside the adapter 23.

The novel adapter 23 provided by the adapter body 33 providing said first receptacle 34 for receiving said hybrid connector part 21, said second receptacle 35 for receiving said fiber optic connector part 22 and said insert holes 36 receiving electrical contact sockets 37 is one monolithic piece.

The novel adapter 23 allows connecting up to twelve or up to twenty four optic fibers and two power supply copper wires in one housing, only one of connector parts should be a hybrid connector part 21, the other connector part should be standard MTP fiber optic connector part 22. Any kind of power supply can be connected in any way to electrical contact pins 37 or tubes of the adapter 23 and thereby to the hybrid connector 21. Due to the compact design the adapter 23 needs less space and can be easily mounted in any kind of housings. Furthermore the thread together with the keying elements allows strong and stabile coupling of the adapter 23 and hybrid connector part 21. The adapter 23 can be mounted to a housing using separate thread.

### List of reference signs

- 20: assembly
- 21: hybrid connector part
- 22: fiber optic connector part
- 23: adapter
- 24: connector housing
- 25: connector housing
- 26: electrical contact
- 27: fiber optic ferrule
- 28: ferrule holding member
- 29: spring element
- 30: spring push element
- 31: guide pin
- 32: opening
- 33: adapter body
- 34: first receptacle
- 35: second receptacle
- 36: insert hole
- 37: electrical contact socket
- 38: outside screw thread portion
- 39: inside screw thread portion
- 40: coupling nut
- 41: keying member
- 42: keying member
- 43: latching hock
- 44: recess
- 45: outside screw thread portion
- 46: copper wire
- 47: round step cut portion
- 48: axis
- 49: axis
- 50: axis
- 51: back stop element
- 52: barb-like element
- 53: flange
- 54: projection
- 55: lead in portion
- 56: conical portion

## Claims

1. An adapter for receiving a hybrid connector part (21) and a fiber optic connector part (22), said hybrid connector part (21) having electrical terminal points and a fiber optic ferrule providing at least one fiber optic terminal point, said fiber optic connector part (22) having no electrical terminal points but a fiber optic ferrule providing at least one fiber optic terminal point, comprising:
an adapter body (33) providing a first receptacle (34) for receiving said hybrid connector part and a second receptacle (35) for receiving said fiber optic connector part, whereby said receptacles (34, 35) are positioned at opposite sides of said adapter body (33); **characterized by**
said adapter body (33) further providing insert holes (36) receiving electrical contact sockets (37), said electrical contact sockets (37) being connectable with the electrical terminal points of said hybrid connector part (21) when said hybrid connector part is inserted in said first receptacle (34), wherein said insert holes (36) receive said electrical contact sockets (37) in such a way that first ends of the electrical contact sockets (37) extends at a first side of the adapter body (33) into the first receptacle (34) so that the first ends of the electrical contact sockets (37) can be contacted by the electrical terminal points of the hybrid connector part when the same is inserted in the first receptacle (34), and that second ends of the electrical contact sockets (37) are at a second side of the adapter body (33) positioned adjacent the second receptacle (35) so that the second ends of the electrical contact sockets (37) can be contacted by separate copper wires (46) when the fiber optic connector part (22) is inserted in the second receptacle (35).

2. The adapter as claimed in claim 1, wherein said adapter body (33) comprises a first outside screw thread portion (38) acting together with an inside screw thread portion of a coupling nut (40) of said hybrid connector part when the same is inserted in the first receptacle (34), whereby said first outer thread portion (38) is positioned together with the first receptacle (34) at a first side of the adapter body (33).

3. The adapter as claimed in claim 1 or 2, wherein said first receptacle (34) of said adapter body (33) comprises a keying element (41) acting together with a keying element (42) of said hybrid connector part when the same inserted in the first receptacle (34).

4. The adapter as claimed in one of claims 1 to 3, wherein said second receptacle (35) comprises latching hocks (43) acting together with recesses (44) of said fiber optic connector part when the same is inserted in the second receptacle (35).

5. The adapter as claimed in one of claims 1 to 4, wherein said adapter body (33) comprises a second outside screw thread portion (45) for mounting the adapter to a housing or a panel, whereby said second outside screw thread portion (45) is positioned together with the second receptacle (35) at a second side of the adapter body (33).

6. An assembly comprising a hybrid connector part (21), a fiber optic connector part (22) and an adapter (23) for receiving said hybrid connector part and said fiber optic connector part, wherein:
said hybrid connector (21) part having electrical terminal points and a fiber optic ferrule providing at least one fiber optic terminal point;
said fiber optic connector part (22) having no electrical terminal points but a fiber optic ferrule providing at least one fiber optic terminal point;
said adapter (23) is **characterized by** features as defined in one of claims 1 to 5.

7. The assembly as claimed in claim 6, wherein said first receptacle (34) of said adapter body (33) and said hybrid connector part (21) are held together in a mated position by a coupling nut (40), said coupling nut (40) having an inside screw thread (38) acting together with an outside screw thread (39) of said adapter body (33).

8. The assembly as claimed in claim 7, wherein said hybrid connector part (21) comprises a connector housing (25) accommodating the electrical terminal points (26), the fiber optic ferrule (27), a ferrule holding member (28) for the fiber optic ferrule (27) and a spring element (29) acting against the ferrule holding member (28) and being held by a spring push element (30) whereby said coupling nut (40) is at least partly surrounding said connector housing (25) when hybrid connector part (21) and the adapter (23) are held together in their mated position by said coupling nut (40).

9. The assembly as claimed in one of claims 6 to 8, wherein the electrical terminal points (26) of the hybrid connector part (21) are positioned along a first axis (48) or plane, wherein ends of optical fibers held by said fiber optic ferrule (27) providing the fiber optic terminal pints are positioned along a second axis (49) or plane, and wherein said first axis (48) or plane runs perpendicular to the respective second axis (49) or plane.

10. The assemby as claimed in one of claims 6 to 9, wherein each of said fiber optic ferrules is a multi fiber ferrule terminating a plurality of optical fibers.

11. The assembly as claimed in one of claims 6 to 10, wherein a hybrid cable is terminated to said hybrid connector part (21), wherein a fiber optic cable is terminated to said fiber optic connector part (22), and wherein separate copper wires (46) are terminated to the electrical contact sockets (37) positioned within the insert holes (36) of said adapter body (33), namely adjacent the second receptacle (35) receiving said fiber optic connector part (22).

## Patentansprüche

1. Adapter zum Aufnehmen eines Hybrid-Verbinderteils (21) und eines Faseroptik-Verbinderteils (22), wobei der Hybrid-Verbinderteil (21) elektrische Anschlusspunkte und eine Faseroptik-Ferrule, die wenigstens einen Faseroptik-Anschlusspunkt bereitstellt, aufweist, wobei der Faseroptik-Verbinderteil (22) keine elektrischen Anschlusspunkte, aber eine Faseroptik-Ferrule, die wenigstens einen Faseroptik-Anschlusspunkt bereitstellt, aufweist, wobei der Adapter Folgendes umfasst:
einen Adapterkorpus (33), der eine erste Buchse (34) zum Aufnehmen des Hybrid-Verbinderteils und eine zweite Buchse (35) zum Aufnehmen des Faseroptik-Verbinderteils bereitstellt, wobei die Buchsen (34, 35) auf entgegengesetzten Seiten des Adapterkorpus (33) angeordnet sind, **dadurch gekennzeichnet, dass**
der Adapterkorpus (33) ferner Einstecklöcher (36) bereitstellt, die elektrische Kontaktfassungen (37) aufnehmen, wobei die elektrischen Kontaktfassungen (37) mit den elektrischen Anschlusspunkten des Hybrid-Verbinderteils (21) verbunden werden können, wenn der Hybrid-Verbinderteil in die erste Buchse (34) eingesteckt wird, wobei die Einstecklöcher (36) die elektrischen Kontaktfassungen (37) auf eine solche Weise aufnehmen, dass sich erste Enden der elektrischen Kontaktfassungen (37) an einer ersten Seite des Adapterkorpus (33) in die erste Buchse (34) erstrecken, so dass die ersten Enden der elektrischen Kontaktfassungen (37) durch die elektrischen Anschlusspunkte des Hybrid-Verbinderteils kontaktiert werden können, wenn derselbe in die erste Buchse (34) eingesteckt wird, und dass zweite Enden der elektrischen Kontaktfassungen (37) an einer zweiten Seite des Adapterkorpus (33) angrenzend an die zweite Buchse (35) angeordnet sind, so dass die zweiten Enden der elektrischen Kontaktfassungen (37) durch gesonderte Kupferdrähte (46) kontaktiert werden können, wenn der Faseroptik-Verbinderteil (22) in die zweite Buchse (35) eingesteckt wird.

2. Adapter nach Anspruch 1, wobei der Adapterkorpus (33) einen ersten äußeren Schraubgewindeabschnitt (38) umfasst, der mit einem inneren Schraubgewindeabschnitt einer Kopplungsmutter (40) des Hybrid-Verbinderteils zusammenwirkt, wenn derselbe in die erste Buchse (34) eingesteckt wird, wodurch der erste äußere Gewindeabschnitt (38) zusammen mit der ersten Buchse (34) an einer ersten Seite des Adapterkorpus (33) angeordnet wird.

3. Adapter nach Anspruch 1 oder 2, wobei die erste Buchse (34) des Adapterkorpus (33) ein Verankerungselement (41) umfasst, das mit einem Verankerungselement (42) des Hybrid-Verbinderteils zusammenwirkt, wenn derselbe in die erste Buchse (34) eingesteckt wird.

4. Adapter nach einem der Ansprüche 1 bis 3, wobei die zweite Buchse (35) Einrasthaken (43) umfasst, die mit Aussparungen (44) des Faseroptik-Verbinderteils zusammenwirken, wenn derselbe in die zweite Buchse (35) eingesteckt wird.

5. Adapter nach einem der Ansprüche 1 bis 4, wobei der Adapterkorpus (33) einen zweiten äußeren Schraubgewindeabschnitt (45) zum Anbringen des Adapters an einem Gehäuse oder einem Panel umfasst, wobei der äußere Schraubgewindeabschnitt (45) zusammen mit der zweiten Buchse (35) an einer zweiten Seite des Adapterkorpus (33) angeordnet wird.

6. Baugruppe, die einen Hybrid-Verbinderteil (21), einen Faseroptik-Verbinderteil (22) und einen Adapter (23) zum Aufnehmen des Hybrid-Verbinderteils und des Faseroptik-Verbinderteils umfasst, wobei
der Hybrid-Verbinderteil (21) elektrische Anschlusspunkte und eine Faseroptik-Ferrule, die wenigstens einen Faseroptik-Anschlusspunkt bereitstellt, aufweist,
der Faseroptik-Verbinderteil (22) keine elektrischen Anschlusspunkte, aber eine Faseroptik-Ferrule, die wenigstens einen Faseroptik-Anschlusspunkt bereitstellt, aufweist,
der Adapter (23) durch Merkmale, wie in einem der Ansprüche 1 bis 5 definiert, gekennzeichnet ist.

7. Baugruppe nach Anspruch 6, wobei die erste Buchse (34) des Adapterkorpus (33) und der Hybrid-Verbinderteil (21) durch eine Kopplungsmutter (40) in einer gesteckten Position zusammengehalten werden, wobei die Kopplungsmutter (40) ein inneres Schraubgewinde (38) hat, das mit einem äußeren Schraubgewinde (39) des Adapterkorpus (33) zusammenwirkt.

8. Baugruppe nach Anspruch 7, wobei der Hybrid-Verbinderteil (21) ein Verbindergehäuse (25) umfasst, das die elektrischen Anschlusspunkte (26), die Faseroptik-Ferrule (27), ein Ferrule-Halteelement (28) für die Faseroptik-Ferrule (27) und ein Federelement (29), das gegen das Ferrule-Halteelement (28) wirkt und durch ein Federschubelement (30) gehalten wird, aufnimmt, wodurch die Kopplungsmutter (40) wenigstens teilweise das Verbindergehäuse (25) umschließt, wenn der Hybrid-Verbinderteil (21) und der Adapter (23) durch die Kopplungsmutter (40) in ihrer gesteckten Position zusammengehalten werden.

9. Baugruppe nach einem der Ansprüche 6 bis 8, wobei die elektrischen Anschlusspunkte (26) des Hybrid-Verbinderteils (21) entlang einer ersten Achse (48) oder Ebene angeordnet sind, wobei durch die Faseroptik-Ferrule (27), welche die Faseroptik-Anschlusspunkte bereitstellt, gehaltene Enden von Lichtwellenleitern entlang einer zweiten Achse (49) oder Ebene angeordnet sind, und wobei die erste Achse (48) oder Ebene senkrecht zu der jeweiligen zweiten Achse (49) oder Ebene verläuft.

10. Baugruppe nach einem der Ansprüche 6 bis 9, wobei jede der Faseroptik-Ferrule eine Mehrfaser-Ferrule ist, die mehrere Lichtwellenleiter anschließt.

11. Baugruppe nach einem der Ansprüche 6 bis 10, wobei ein Hybridkabel an den Hybrid-Verbinderteil (21) angeschlossen ist, wobei ein Lichtwellenleiter-Kabel an den Faseroptik-Verbinderteil (22) angeschlossen ist und wobei gesonderte Kupferdrähte (46) an die innerhalb der Einstecklöcher (36) des Adapterkorpus (33) angeordneten elektrischen Kontaktfassungen (37), und zwar angrenzend an die zweite Buchse (35), die den Faseroptik-Verbinderteil (22) aufnimmt, angeschlossen sind.

## Revendications

1. Adaptateur destiné à recevoir une pièce de connecteur hybride (21) et une pièce de connecteur à fibre optique (22), ladite pièce de connecteur hybride (21) ayant des points d'extrémité électrique et une ferrule de fibre optique fournissant au moins un point d'extrémité de fibre optique, ladite pièce de connecteur à fibre optique (22) ne comportant pas de points e jonction électrique mais une ferrule de fibre optique fournissant au moins un point d'extrémité de fibre optique, comprenant :
un corps d'adaptateur (33) fournissant un premier logement (34) pour recevoir ladite pièce de connecteur hybride et un second logement (35) pour recevoir ladite pièce de connecteur de fibre optique, de sorte que lesdits logements (34, 35) sont positionnés sur des côtés opposés dudit corps d'adaptateur corps (33) ; **caractérisé en ce que** :
ledit corps d'adaptateur (33) fournit en outre des trous d'insertion (36) recevant des fiches de contact électrique (37), lesdites fiches de contact électrique (37) pouvant être connectées avec les points de jonction électrique de ladite pièce de connecteur hybride (21) lorsque ladite pièce de connecteur hybride est insérée dans ledit premier logement (34), où lesdits trous d'insertion (36) reçoivent lesdites fiches de contact électrique (37) de telle manière que des premières extrémités des fiches de contact électrique (37) s'étendent d'un premier côté du corps d'adaptateur (33) dans le premier logement (34) de manière à ce que les premières extrémités des fiches de contact électrique (37) puissent être mises en contact avec les points de jonction électriques de la pièce de connecteur hybride lorsque celle-ci est insérée dans le premier logement (34), et que les secondes extrémités des fiches de contact électrique (37) se situent à un second côté du corps d'adaptateur (33), positionnées de manière adjacente au second logement (35) de manière à ce que les secondes extrémités des fiches de contact électrique (37) puissent être mises en contact avec des fils de cuivre séparés (46) lorsque la pièce de connecteur à fibre optique (22) est insérée dans le second logement (35).

2. Adaptateur tel que revendiqué dans la revendication 1, dans lequel ledit corps d'adaptateur (33) comprend une première portion de filetage de vis extérieure (38) coopérant avec une portion de filetage de vis intérieure d'un écrou d'accouplement (40) de ladite pièce de connecteur lorsque celle-ci est insérée dans le premier logement (34), moyennant quoi ladite première portion de filetage extérieure (38) est positionnée conjointement avec le premier logement (34) au niveau d'un premier côté du corps d'adaptateur (33).

3. Adaptateur tel que revendiqué dans la revendication 1 ou la revendication 2, dans lequel ledit premier logement (34) dudit corps d'adaptateur (33) comprend un élément de manipulation (41) agissant conjointement avec un élément de manipulation (42) de ladite pièce de connecteur hybride lorsque celle-ci est insérée dans le premier logement (34).

4. Adaptateur tel que revendiqué dans l'une des revendications 1 à 3, dans lequel ledit second logement (35) comprend des crochets d'enclenchement (43) agissant conjointement avec des évidements (44) de ladite pièce de connecteur à fibre optique lorsque celle-ci est insérée dans le second logement (35).

5. Adaptateur tel que revendiqué dans l'une des revendications 1 à 4, dans lequel ledit corps d'adaptateur (33) comprend une seconde portion de filetage de vis extérieure (45) pour le montage de l'adaptateur sur un boîtier ou un panneau, de sorte que ladite seconde portion de filetage de vis extérieure (45) soit positionnée conjointement avec le second logement (35) au niveau d'un second côté du corps d'adaptateur (33).

6. Assemblage comprenant une pièce de connecteur hybride (21), une pièce de connecteur à fibre optique (22) et un adaptateur (23) pour recevoir ladite pièce de connecteur hybride et ladite pièce de connecteur à fibre optique, où :
ladite pièce de connecteur hybride (21) comporte des points de jonction électrique et une ferrule de fibre optique fournissant au moins un point d'extrémité de fibre optique ;
ladite pièce de connecteur à fibre optique (22) ne comporte pas de points de jonction électrique mais une ferrule de fibre optique fournissant au moins un point d'extrémité de fibre optique ;
ledit adaptateur (23) est **caractérisé par** des caractéristiques telles que définies dans l'une des revendications 1 à 5.

7. Assemblage tel que revendiqué dans la revendication 6, dans lequel ledit premier logement (34) dudit corps d'adaptateur (33) et ladite pièce de connecteur hybride (21) sont maintenus ensemble dans une position accouplée par un écrou d'accouplement (40), ledit écrou d'accouplement (40) ayant un filetage intérieur (38) coopérant avec un filetage extérieur (39) dudit corps d'adaptateur (33).

8. Assemblage tel que revendiqué dans la revendication 7, dans lequel ladite pièce de connecteur hybride (21) comprend un boîtier de connecteur (25) logeant les points de jonction électrique (26), la ferrule de fibre optique (27), un élément de maintien de ferrule (28) pour la ferrule de fibre optique (27) et un élément à ressort (29) agissant contre l'élément de maintient de ferrule (28) et étant maintenu par un élément de poussée à ressort (30), de sorte que ledit écrou d'accouplement (40) entoure au moins partiellement ledit boîtier de connecteur (25) lorsqu'une pièce de connecteur hybride (21) et l'adaptateur (23) sont maintenus ensemble dans leur position accouplée par ledit écrou d'accouplement (40).

9. Assemblage tel que revendiqué dans l'une des revendications 6 à 8, dans lequel les points de jonction électrique (26) de la pièce de connecteur hybride (21) sont positionnés le long d'un premier axe (48) ou plan, où des extrémités de fibres optiques maintenues par ladite ferrule de fibre optique (27) fournissant les point d'extrémité de fibre optique sont positionnées le long d'un second axe (49) ou plan, et où ledit premier axe (48) ou plan est perpendiculaire au second axe respectif (49) ou plan.

10. Assemblage tel que revendiqué dans l'une des revendications 6 à 9, dans lequel chacune desdites ferrules de fibre optique est une ferrule multifibre terminant une pluralité de fibres optiques.

11. Assemblage tel que revendiqué dans l'une des revendications 6 à 10, dans lequel un câble hybride est terminé par ladite pièce de connecteur hybride (21), où un câble à fibre optique est terminé par ladite pièce de connecteur à fibre optique (22), et où des fils de cuivre séparés (46) sont terminés par des fiches de contact électriques (37) positionnées dans les trous d'insertion (36) dudit corps d'adaptateur (33), à savoir de manière adjacente au second logement (35) recevant ladite pièce de connecteur à fibre optique (22).
